# EUROPEAN PATENT SPECIFICATION

(11) **EP 0 775 845 B1**
(45) Date of publication and mention of the grant of the patent: **18.10.2000**
(21) Application number: 96308437.1
(22) Date of filing: 21.11.1996
(51) Int. Cl.: F16G 11/10

(54) **External single handed closure and release mechanism**
Öffnungs- und Schliessmechanismus zur einhändigen Bedienung
Dispositif externe de fermeture et d'ouverture manipulable d'une seule main

(30) Priority: 22.11.1995 US 562292
(43) Date of publication of application: 28.05.1997
(73) Proprietor: Gold, Danny, Hong Kong (HK)
(72) Inventor: Gold, Danny, Hong Kong (HK)
(74) Representative: Chettle, Adrian John

(56) References cited:
- EP-A- 0 344 001
- DE-U- 9 002 225
- DE-U- 9 300 263
- DE-U- 9 401 623
- US-A- 5 016 290
- US-A- 5 263 202

## Description

### BACKGROUND OF THE INVENTION

The invention is generally directed to single hand closure and release for a glove, garment or container and in particular to a single handed mechanism utilizing a shock cord or other extendable cord in which the closure mechanism is retained outside of a channel in which the shock cord generally extends.

In the past there have been many attempts made to provide suitable closure mechanisms to tighten the gauntlet portion of the glove following the wearer's insertion of the hand as well as waistbands for pants and the like. In addition, closing mechanisms in connection with stretchable bands, such as shock cords, have been utilized to tighten closures around the openings of bags, around the edges of tubular containers and merely to shorten the length of a crushable member or panel.

The initial efforts to provide a suitable closure mechanism required two hands to properly tighten the mechanism. In many applications this need for two hands was awkward or unsuitable. For example, in tightening the gauntlet portion of a glove once the hand is inserted, it is difficult to manipulate the closure mechanism at the wrist portion of the glove. Another problem associated with many of the prior art closure mechanisms is the dexterity required to manipulate the mechanisms. In many of them there are small buttons or handles which are difficult to manipulate if one is already wearing a glove. Thus, there is substantial need for a simple, effective and singlehanded closure and release mechanism.

The applicant has previously developed single handed closure mechanisms such as illustrated in EP-A-0 344 001 incorporating narrowed regions within the hem or the channel around the opening of a glove which, together with a shock cord, creates a single handed closure mechanism. Various forms of this basic systems have been utilized in which improvements in the configuration, dimensions, shock cord path and the like as developed by applicant have increased the effectiveness of the single handed closure mechanism. However, each of the approaches has utilized a closure mechanism contained within the hem or channel or in the opening of the hem or channel. Others have utilized various conventional closure devices such as a tanka or a bowcord lock (TM) closure within the hem or channel to create a single handed closure mechanism.

In the embodiments in which the closure mechanism is found either within the channel or at the opening of the channel to the exterior, the closure mechanism tends to restrict the free sliding of the shock cord within and, particularly, coming out of the channel so that more force must be applied to shock cord to engage the closure mechanism.

Others have placed closure mechanisms outside of the channel, generally in an unconnected state as the shock cord or, retained from falling off by a cord or strap some distance from the channel opening. Such an arrangement is illustrated in figure 1 of US-A-5 263 202 (corresponding to the preamble of claim 1). These outside channel mechanisms have been rather ineffective in operation due to the difficulty in operating and the inefficiency of the system. The inefficiency of operation is related to the failure of the shock cord to move relative to the closure mechanism when the user pulls on the shock cord.

In addition, there is a desire to have the closure mechanism present on the outside of the channel (and not within the channel as is the case, for example, in figure 2 of said US-A-5 263 202) so that the operation of the closure mechanism is apparent to the user and to assist in the operation of the closure mechanism so that the closure and release of the closure mechanism are one-handed operations.

Accordingly, there is a need for an improved one-handed closure mechanism in which the operative elements of the closure mechanism are located outside of the channel region and both closure and release are accomplished effectively.

### SUMMARY OF THE INVENTION

According to the invention there is provided a one-handed closure and release system for an article, comprising:
a crushable channel attached to a crushable portion of an article;
a stretchable cord means extending through the channel and at least one end of which extends out of an opening in the channel, in use said cord means stretching along its length in response to pressure, from an unstretched length to a stretched length, the cross-sectional area of said cord means when stretched being less than when unstretched;
releasable closure means being provided for restricting movement of said cord means therethrough when unstretched, and for allowing free motion of said cord means therethrough when stretched, pressure exertable with one hand on said end extending said cord means from the unstretched to the stretched length, and moving a portion of said cord means through said closure means and release of said pressure causing a portion of said cord means within the channel to crush said channel as it attempts to return to the unstretched length, thereby shortening the length of said channel and the crushable portion of the article to which it is attached,
a portion of the cord means moved through said closure means upon application of pressure to said end moving back through said closure means toward the channel upon one handed release of the said closure means, thereby allowing said channel and the portion of the article to which the channel is attached to return to the uncrushed state;
and retaining means coupling the said closure means to said article and being placed proximate said opening outside said channel, characterized in that two such retaining means are provided which act one each on respective sides of the opening whereby said closure means is held over said opening and restricted from moving away therefrom.

It is an object of the invention to provide an improved closure mechanism in which an elastic shock cord extends through a channel and then extends through a closure mechanism secured to the garment or article by a pair of straps, directly proximate to the opening at which the shock cord exits the channel so that a one-handed closure and release operation is achieved.

Another object of the invention is to provide an improved one handed closure mechanism in which a tanka is held in place over the opening to the channel so that pulling upon the ends of the shock cord extending through the tanka creates a one handed closure mechanism which may likewise be released with only one hand.

A further object of the invention is to provide an improved closure mechanism in which a tanka with mounting struts is secured over the opening to a channel so that the tanka is held in place directly over the opening to the channel and a one handed closure mechanism and release operation are implemented.

Still another object of the invention is provide improved closure mechanism in which a bow cord closure mechanism is mounted directly over the opening to a channel so that efficient single handed operation to close and open the mechanism is provided.

Still yet another object of the invention is to provide an improved closure and release mechanism in which the operation of the closure and release is visible, apparent and easily manipulated with a single hand, even under adverse environmental conditions.

Still yet another object of the invention is to provide an improved closure and release mechanism incorporating a bow cord lock mounted above an opening to a channel for tightening the gauntlet portion of a glove or mitten after the hand is inserted which may be operated by a single hand.

Yet another object of the invention is to provide an improved closure mechanism incorporating a tanka or bow cord lock mounted over the opening to a channel including a shock cord for closing a waistband or hood closure in a garment or opening in a bag or container.

Yet still another object of the invention is to provide an improved one handed closure and release mechanism for reducing a dimension of a crushable member.

Still yet another object of the invention is to provide an improved one handed mechanism for reducing the dimension of a crushable member incorporating a shock cord running through the channel having a closure member mounted at the exit of the shock cord from the channel.

Still other objects and advantages of the invention will in part be obvious and will in part be apparent from the specification.

Features of construction, combinations of elements and arrangements of parts of the invention will be exemplified in the constructions hereinafter set forth, and the scope of the invention will be defined by the appended claims.

### BRIEF DESCRIPTION OF THE DRAWINGS

For a fuller understanding of the invention, reference is had to the following descriptions taken in connection with the accompanying drawings, in which:
Fig. 1 is a perspective view of a single handed glove closure and release mechanism constructed in accordance with a preferred embodiment of the invention;
Fig. 2 is a perspective view of a closure and mechanism constructed in accordance with another preferred embodiment of the invention;
Fig. 3 is a partial cutaway and enlarged perspective view of a bow cord closure and release member constructed in accordance with the preferred embodiment of Fig.2;
Fig. 4 is a partial perspective view similar to the view of Fig. 3 showing the manner in which the closure mechanism releases in accordance with a preferred embodiment;
Fig. 5 is an exploded perspective view of the closure mechanism of Fig. 2;
Fig. 6 is a perspective view of the closure mechanism constructed in accordance with the preferred embodiment invention in which the closure mechanism is in the locked state;
Fig. 7 is the closure mechanism of Fig. 6 in the released position;
Fig. 8 is a perspective view of a bow cord closure and release member constructed in accordance with another preferred embodiment of the invention;
Fig. 9 is an exploded perspective view of the bow cord closure of Fig. 8;
Fig. 10a is a cut-away perspective view of a closure and release member constructed in accordance with another preferred embodiment of the invention;
Fig. 10b is a front elevational view of the closure member of the Fig. 10a in its unbiased state; and
Fig. 10c is a front elevational view similar to the view of Fig. 10b in which the closure member of Fig. 10a is in its released position.

### DETAILED DESCRIPTION OF THE PREFERRED EMBODIMENTS

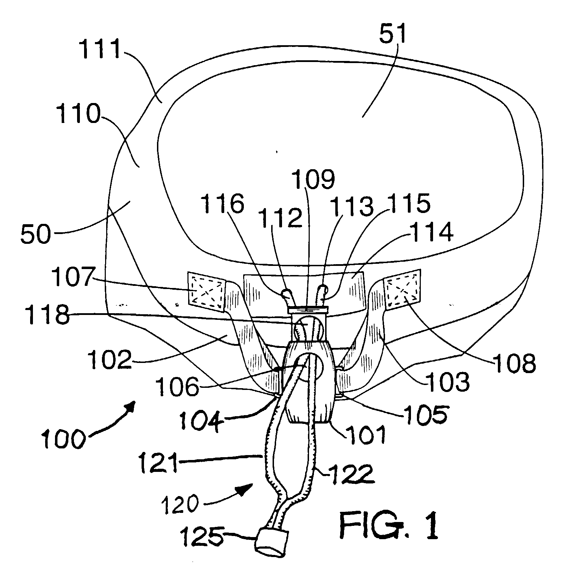

Reference is made to Fig. 1 wherein a closure and release mechanism, generally indicated as 100, in accordance with a preferred embodiment of the invention is depicted. Closure mechanism 100 includes a tanka type spring loaded closure member, generally indicated as 101, having a button 109 for comprising the spring loaded gripping mechanism within the opening 106 of tanka 101 so that the internal opening 118 aligns with opening 106. Tanka 101 also includes extended formed loops 104 and 105 for receiving straps 102, 103 which are in turn retained in place by stitching 107, 108 to the body of the garment 50 in the area of channel 111 formed within hem 110. The garment 50, such as a glove or a mitten, has a channel 111 formed by providing a hem or similar enclosure around the periphery of the opening 115 of the glove or mitten and a shock cord 120 extends around the channel and the two free ends 121, 122 extend outwardly through openings 112, 113 in the channel. The free ends 121, 122 also extend through a guide member 114 having openings 115 and 116 which align with openings 112,113. Finally, free ends 121, 122 extend through the central opening 106 in tanka 101 and are then secured together with a handle 125 which may be formed of a piece of leather or similar pliable material stitched together. Tanka 101 is held by straps 102,103 directly in front of openings 112, 113 and channel 111. While the tanka is not rigidly secured it is restrained by straps 102,103 from moving away from openings 112, 113.

In operation, a user pulls outwardly on handle 125 which has the effect of stressing and therefore stretching shock cord 120. One of the properties of a shock cord is that as stress is applied to the shock cord along its length the shock cord stretches in length and the cross-sectional area of the shock cord, in at least the stressed area, decreases. In this case, the stress would be applied in the region of opening 106 in tanka 101, which firmly grips the unstretched shock cord 120. As more pressure is applied to shock cord 120 by pulling on handle 125, the cross sectional area of shock cord 120 in the region within tanka hole 106 trapped between the bottom of internal opening 118 and the top of tanka hole 104 decreases. Between the reduced cross-sectional area of the shock cord and the stress on the shockcord, more of the shockcord slides outwardly through tanka hole 106. The length of the stretched portion of the shock cord 120 within channel 111 does not materially change. However, this length represents a smaller proportion of the total length of the shock cord 120 than it did prior to the stretching outward by pulling on handle 125. When the full extent of the stretch has been reached; generally limited by the force exerted and/or the characteristics of the elastic shock cord, the user releases handle 125. As the stress on the shock cord is released it attempts to shrink back to its original length and its original cross sectional area. Very quickly, the shock cord portion within opening 106 and tanka 101 is trapped in place by tanka 101 so that the relative portions of the shock cord within channel 111 and outside of channel 111 remain relatively constant. However, as the stress has been released, the shock cord within channel 111 shrinks back to an unstretched state, thereby shortening the length of the channel by crushing the material of channel 111 and gripping the wearer's wrist inside of the glove. Thus, upon release of handle 125 the closure mechanism locks in the closed state. This result is achieved merely by pulling on handle 125 outwardly through the tanka hole 106. Only one hand is required and in fact, with handle 125, only two fingers are required. Those two fingers require very little dexterity to grip handle 125 and may be easily manipulated when the wearer's fingers are covered in a glove or mitten.

The closure mechanism in its locked state as thus described has the shock cord under some stress, generally related to the force required to crumple the material of the channel region. By gripping tanka 101 and pressing downwardly on release button 109, the size of the gap formed by the intersection of opening 106 and opening 118 is expanded so that free ends 121, 122 of shock cord 120 can move freely through this gap. This allows the portion of shock cord 120 trapped outside of tanka 101 in the locked position to freely flow through opening 106. As a result of the stress present in a portion of shock cord 120 within channel 111, some portion of the shock cord 120 will slide through opening 106 thereby "un-crushing" channel 111 and extending the length of the shock cord in the channel. Thus, even without needing pulling on the channel region the closure mechanism automatically releases and reverses the shortening of the length of the channel.

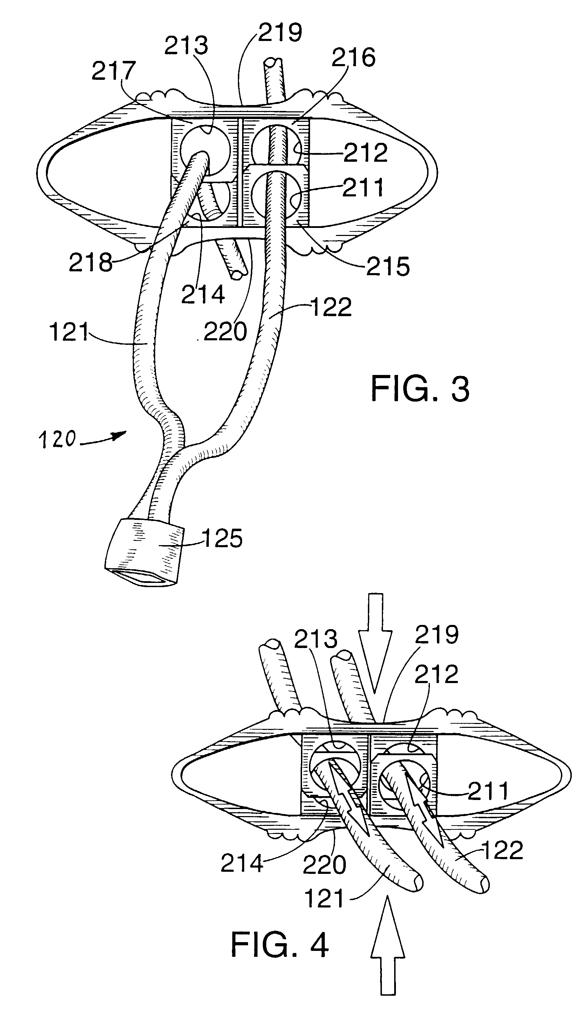

Reference is next made to Figs. 2-7 wherein a one handed closure and release mechanism generally indicated as 200, constructed in accordance with another embodiment of the invention is depicted. Like reference numerals represent like elements. Closure mechanism 200 includes a channel 111 through which a shock cord 120 is threaded. The free ends 121 and 122 of shockcord 120 extending outwardly through openings 112, 113 in channel 111. Shock cord 120, which is generally formed as stretchable elastic shock cords, generally formed of a series of central rubber or elastic threads covered by a knitted fabric cover, is stretchable along its length.

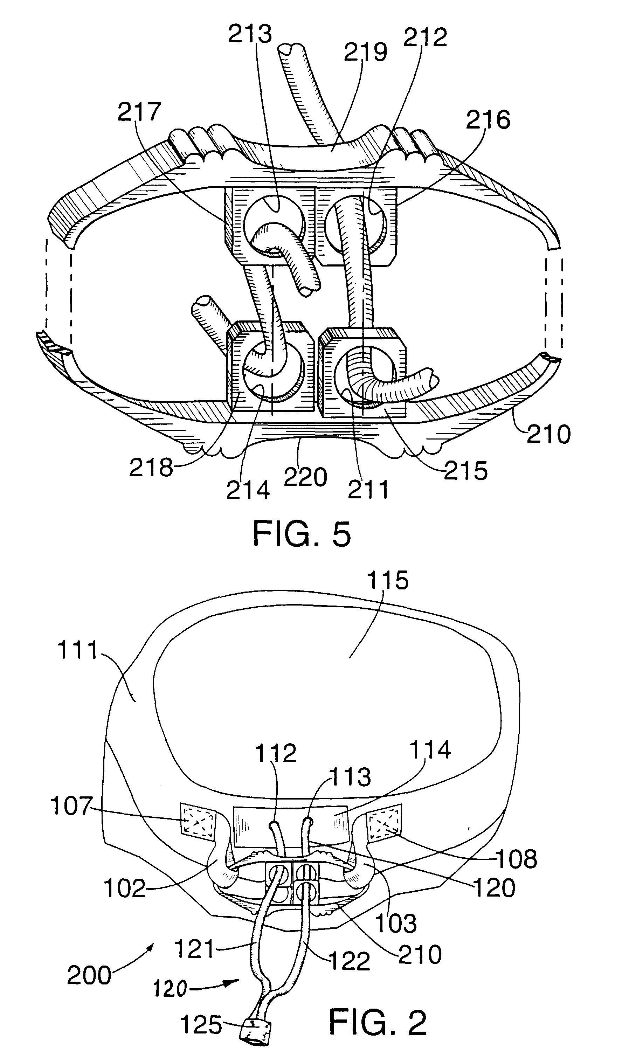

This configuration is the same as that shown in Fig. 1. The difference is that a bow cord lock 210 rather than the tanka is utilized. Bow cord lock 210 is formed generally in the over all shape of a bow with four generally rectangular blocks having central openings therein. Two of the rectangular blocks 214 and 215, having circular openings 211 and 214, are formed extending upwardly from the inner, bottom surface of bow cord 210. The remaining two rectangular blocks 216, 217 having openings 212, 213 respectively are formed extending downwardly from the inner, top surface of bow cord 210. As best seen in Fig.3, when bow cord 210 is in its normal unstressed state openings 211 and 212 form one pathway through which shock cord free end 122 extends. Openings 213, 214 form a second pathway through which shock cord free end 121 extends. As seen in both Fig.3 and more explicitly in the exploded view of Fig.5, the two openings through which each of the shock cords free ends extend are vertically misaligned so as to prevent movement of the shock cord. Rather, the bow cord lock operates by gripping the shock cord free ends 121 and 122 between the edges of the openings of the misaligned rectangles. The springlike nature of the bow cord lock, usually made of a resilient plastic material, resist the shock cord's pressure to align the openings. By pressing inwardly, on indented surfaces 219 and 220 in the direction of the vertically oriented arrows (Fig. 4), the pairs of openings become more aligned as does the effective size of the opening in the pathway for each of the free ends of the shock cord. If pressed a maximum amount, the bow top rectangles 216 and 217 rest up against the top surface of the bottom section of bow cord 210 and the top surfaces of bottom rectangles 215 and 218 rest up against the inner top or bottom surface of the top portion of bow cord 210. The first pathway formed of openings 211 and 212 and second pathway formed by openings 213 and 214 align completely so that shock cord free ends 122 and 121 can merely slide through the openings.

The difference in the outside diameter of shock cord free ends 121, 122 and the diameter of the openings 211, 212, 213, 214 have been exaggerated slightly to emphasize the relative independence of the shock cord diameter to the size of the openings in the full cord closure member 210. However, in practice, a closer relationship in the diameters of shock cord 120 and openings 211, 212, 213, 214 also provides for equally effective operation.

As seen in Fig.2, bow cord closure mechanism 210 is held in place at two points by straps 102, 103 which loop around the curved ends of the bow cord closure mechanism 210 and are then firmly stitched to channel 111 by stitching squares 107, 108. Bow cord closure mechanism 210 is held firmly and closely above openings 112, 113 which pass free ends 121, 122 from within channel 111. A leather guide member 115 is present over openings 112, 113 and has holes aligned above the opening in channel 111 so that shock cord free ends 121, 122 will slide more smoothly into and out of channel 111. The openings in bow cord closure 210 are aligned directly above openings 112, 113 so that the shock cord free ends 121, 122 may be easily pulled through the misaligned pathways by pulling on handle 125 securing together the free ends 121, 122 of shock cord 120.

As an outward force is applied on handle 125, the first reaction is that bow cord mechanism 120 moves outwardly until straps 102, 103 are taut. Straps 102, 103 are essentially non stretchable and are adapted to allow bow cord mechanism to move only a very small distance or no distance away from the entrance of openings 112, 113 in channel 111. Once this flexibility is taken up, further pulling on handle 125 has the effect of stressing shock cord 120, particularly in the portion of free ends 121, 122 proximate to the misaligned paths. As noted above, when the elastic shock cord is stretched along its length this has the result and effect of reducing the cross sectional area of the shock cord, particularly in the stress regions. As the shock cord is pulled, the pulling force, combined with the physical reduction in cross sectional area of the shock cord 120 has the effect of overcoming the movement restricting force exerted perpendicular to the length of the shock cord by the inner surfaces of the openings forming the misaligned path. Thus, the shock cord both stretches and slides through the misaligned pathway in the bow cord mechanism. It is critical to the operation of this closure mechanism that the bow cord be held close to the openings 112, 113.

As shown in Fig.2, when one pulls on handle 25 beyond the point that movement of the bow cord mechanism 210 is permitted by straps 102, 103, shock cord 210 stretches beyond its unstressed and unstretched length to a greater length. While this stretching is going on, the length of the shock cord within channel 111 remains essentially unchanged. The distance between openings 112, 113 and the bow cord assembly likewise remains approximately the same and the additional length of the shock cord is that portion which is pulled through bow cord mechanism 210. The amount of length of shock cord pulled beyond the bow cord mechanism 210 is related to the force exerted at handle 125.

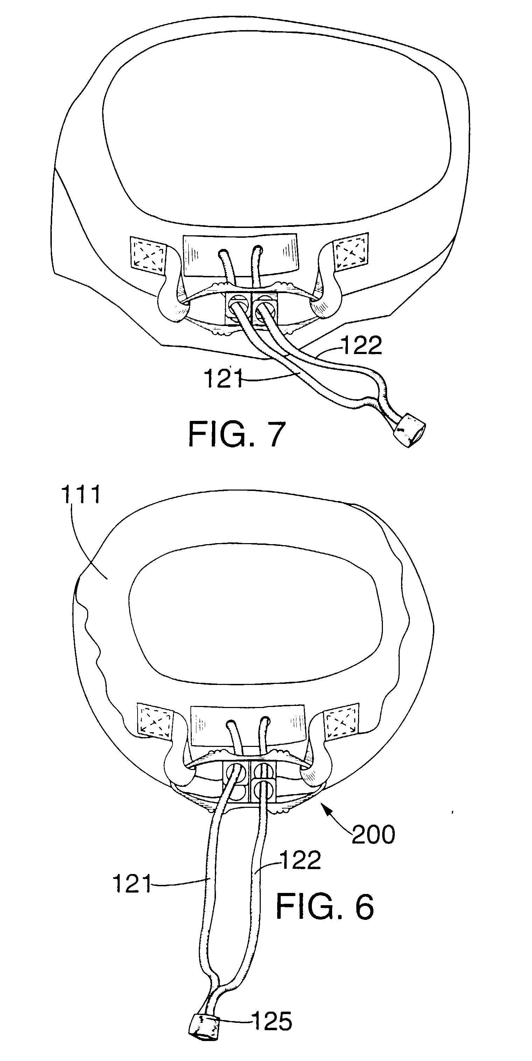

Fig. 6 shows closure mechanism 200 following release of the handle 125. As the handle end 125 is released, the shock cord 120 attempts to revert to its unstressed, unstretched state. However, because the pressure exerted on the sides of the shock cord free ends 121, 122 by the misaligned pathways of bow cord lock 210, the shock cord free ends 121, 122 are trapped in place at the point at which they have been pulled to. As the shock cord is locked in place, it attempts to return to its unstressed and unstretched state.

The portion of the free ends 121, 122 outside of bow cord closure 210 return to an unstressed and unstretched state as they shrink. On the other side of bow cord closure 210 the portion of the shock cord within channel 111 and extending outwardly from openings 112, 113 to closure member 210 also attempts to return to its unstretched length. However, the effort by the shock cord to return to its unstretched state has the effect of biasing channel 111 and causing channel 111, which is formed of a crushable material to crush and thus shorten in length until the force exerted by the shock cord on the channel equals the pressure of the channel to "un-crush". This is an adaptation for the reduced amount of shock cord present in the channel. In a glove this causes the gauntlet of the glove to grip the wearer's wrist tightly. In practice, the amount of shock cord which may be pulled out of the channel is greater than is necessary to cause the channel to reduce in size to the size of the wearer's wrist. As a result, the gauntlet is biased against the wearer's wrist, thus maintaining a firm seal.

When the indented finger grips 219, 220 are pressed as shown in Fig.4, the shock cord is unlocked and the openings 211, 212, 213 and 214 aligned to form two open pathways as shown in Figs. 4 and 7. The pathways are realigned and the effective cross sectional area of the openings is increased to a size greater than the cross sectional area of each of the free ends 121, 122 of shock cord 120. The stress or pressure in the shock cord again attempts to relieve the pressure by returning to its unstressed and unstretched shape and length. The shock cord is retained in two separate sections which separately try to achieve an unstretched state when the closure mechanism is in its at rest position with the misaligned pathways. By squeezing the bow cord lock to align the pathways there is no more resistance to movement of the shock cord through the bow cord lock and the shock cord attempts to equalize and reduce stress over its entire length. Thus, a substantial portion of the stretched shock cord moves across the pathway in the bow cord lock to the channel side of the bow cord lock and into the channel. The effect of this return is to increase the unstretched shock cord within the channel so that the tight gripping of the wearer's wrist or the gauntlet variation of the closure mechanism is released. It is not necessary to pull on the channel or within the gauntlet to extend the length of the channel region. This of course could be accomplished or augmented by pulling on the channel if desired.

Fig.6 shows the ends of shock cord 120 extended outwardly so that a greater proportion of the shock cord is outside of the channel and the bow cord lock. Also, note that the channel region has crushed and decreased in length.

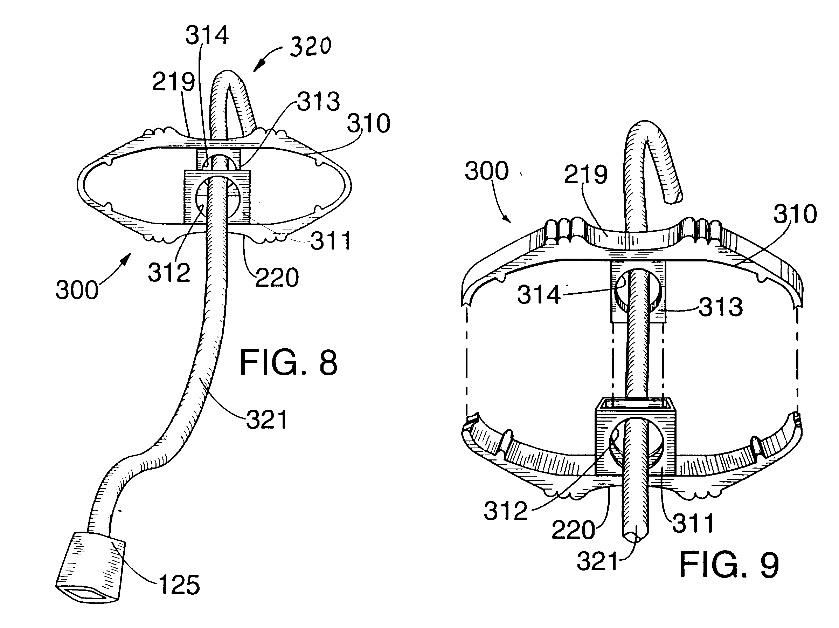

Reference is next made to Figs. 8 and 9 wherein a one handed closure and release mechanism constructed in accordance with another preferred embodiment of the invention, generally indicated as 300, is depicted. Like elements are represented by like reference numerals. Closure mechanism 300 includes a bow cord lock mechanism 310 having a single pair of misaligned rectangular projections with openings, rather than the two pairs found in the embodiment of Figs. 2-7.

Bow cord lock 310 of Fig.8 is shown separated from a channel or garment but would in use be attached with two straps as shown in the embodiments of Figs.1-7. In many applications it is either not desired or necessary to have two free ends of the shock cord extend out of the channel or hem. Rather, it is more aesthetical pleasing and functionally appropriate to permanently affix one end of the shock cord within the channel or to the article or garment and then have the single remaining free end extend outwardly from the channel through closure member mechanism.

This structure is particularly appropriate where the closure mechanism is utilized in an arrangement where there is no tubular enclosure restricting the circumference or perimeter length of a tubular member, such as at the wrist of a glove or in the draw string around a hood. For example, where a dimension of a crushable member, such as a small section at the side of a wearer's pants, a portion of a bag's surface or other similar situation where the dimension shortening function is required only one free end need be used.

As shown Figs. 8 and 9, the shock cord 321 extends through misaligned openings 314 and 312 after emerging from the channel region, terminating in handle 125. Bow cord 310 has a first, generally rectangular member 311 extending upwardly from the inner bottom surface and having an opening 312 therein. Likewise, generally rectangular member 313 extends downwardly from the inner top surface of bow cord lock 310 and has an opening 314 therein. In Fig. 8, which shows the at-rest position, openings 312 and 314 are vertically misaligned, although they are laterally aligned. When the pressed surfaces 219, 220 are squeezed between a user's fingers the upper and bottom surfaces of bow cord lock 310 approach each other until the inner top surface of 310 contacts the upper surface of rectangular member 311 and the lower end surface of rectangular member 313 contacts the bottom inner surface of bow cord lock 310. In this condition openings 312 and 314 are aligned much as shown in Figs.2 and 7 with respect to the dual pair embodiment.

As apparent in the drawings, the bow cord lock 310 has a depth so that rectangular members 311 and 313 are generally parallel to each other with rectangular member 311 in front of (in the orientation of Fig. 8) rectangular member 313.

In operation, the closure mechanism 300 of Figs. 8 and 9 operates in a very similar fashion to the closure mechanism of Figs.2-7. First, one pulls on the handle 125 stressing and stretching shock cord 320 and free end 321. As the stress builds up the cross sectional area of shock cord 320 diminishes in the region of the bow cord lock 310, which has the effect of reducing the gripping pressure exerted on shock cord 320 in the region of bow cord lock 310. Shock cord 320 slides through the misaligned path until the remaining biasing force in the shock cord along with the gripping force of cord lock 310 equalizes. Then, when handle 125 is released, the portion of shock cord 320 trapped within bow cord lock 310 is held in place. The shock cord naturally attempts to release the stress and return to its unstressed and unstretched state. However, as the shockcord 320 is trapped at a new point with a greater portion of its length outside of bow cord lock 310 than prior to pulling on the handle 125, the shock cord 320 extending outside of the bow cord lock 310 returns to its unstressed, unstretched condition and shortens. As it shortens it also increases its cross sectional area back to the starting position with an unstressed and unstretched dimension. This has the further effect of increasing the gripping force of the misaligned pathway of bow cord lock 310. On the other side of bow cord lock 310, the shock cord, in a stressed and stretched condition, is connected between the bow cord lock 310 and the fixed end of the shock cord. Because the channel region there between is formed of a crushable material, the shock cord in its effort to release the stretching energy imparted to it by pulling on handle 125 decreases its length against the pressure of the channel material, thereby crushing the channel material and reducing the distance of the channel between the bow cord lock 310 and the fixed end of the shock cord. In the event that this arrangement is utilized on a glove or mitten gauntlet with one end secured inside the channel the channel will then tightly grip the wearer's wrist. In the event that this embodiment is utilized in connection with a crushable panel, the length of the channel along the crushable panel is deformed and reduced along the length of the channel to a shorter distance with a resistance to expansion based upon the biasing force of the shock cord.

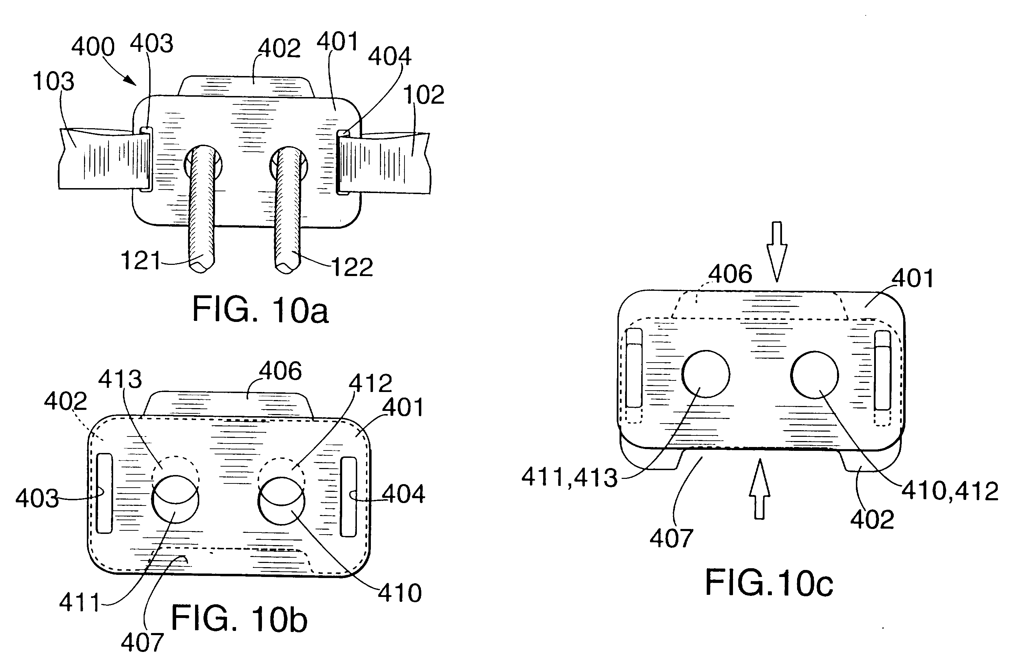

Reference is next made to Figs. 10a, 10b, and 10c wherein a one handed closure mechanism constructed in accordance with another preferred embodiment of the invention generally indicated as 400 is depicted. Like elements are represented by like reference numerals. Closure mechanism 400 is formed of two panels secured, through aligned slots by two straps, over the openings to the channel.

Closure mechanism 400 includes a front panel 401 and a rear panel 402 having aligned slots 404, 405 at their sides for being secured to the outside of the channel by straps 102, 103. Although the drawing of Fig.10a does not show the exit of the channel such as shown in Figs.1 and 2, panels 401, 402 are secured in the same fashion as bow cord locks 101, 210 and 310 directly in front of the openings to the channel with two straps.

In the embodiment of Figs. 10a, 10b and 10c, front panel 401 is a generally rectangular member having openings 410 and 411 situated generally in the center of the panel. The rear panel 420 has a generally similar rectangular shape. However, in addition to having a pair of openings 412, 413 which align laterally but not vertically with openings 410, 411, rear panel 402 has a upwardly extending tab 406 at the top surface of back panel 402, extending upwardly above the top edge of front panel 401. Rear panel 402 also has a recessed portion 407 in the central portion of the bottom of rear panel 402. In this way, when a user grips closure mechanism 400 vertically, with one finger or thumb resting on tab 40 and the thumb or other fingers resting on the bottom surface of front panel 401, a vertical squeezing force causes rear panel 402 to move downwardly relative to front panel 401, thereby aligning openings 410 and 412 and 411 and 413 respectively (Fig.10c).

The materials utilized for straps 102, 103 are more critical to the functioning of the closure mechanisms of Figs. 10a, 10b and 10c than in the earlier embodiments because these straps serve a dual purpose. Not only do they assure that the locking mechanism remains in front of and close to the openings in the channel so that the energy applied by pulling on the free end of the shock cord is applied to the locking mechanism rather than wasting this force in other ways, but it also must act as the biasing force to retain the misaligned openings in their misaligned position which serves to lock the shock cord within the closure mechanism. Thus, it is important that straps 102, 103 have very little stretch along their length to prevent movement of the closure mechanism away from the channel opening and have sufficient resiliency in the transverse direction so as to provide sufficient force to establish pressure on the shock cord in an at-rest position as shown in Figs. 10a and 10b, while allowing with suitable pressure for the straps to be compressed to reach the position shown in Fig. 10c. Currently, various types and strengths of nylon, leathers and plastics have been utilized in preferred embodiments.

The closure mechanism 400 operates in much the same way that the earlier embodiments operated. The user pulls on the free ends of the shock cord, preferably with a handle such as handle 125 as shown in the earlier embodiments which has the effect of pulling shock cord from the channel through the closure locking member. On release the additional shock cord pulled though the closure locking member is retained on the outside of the channel and the channel length is reduced as the shock cord attempts to return to its original unstressed and unstretched length against the crushable fabric of the channel.

The closure mechanism 400 releases by squeezing vertically across tab 406 and the bottom surface of front panel 401 which aligns the pairs of openings as shown in Fig.10c. In this position the shock cord again moves back towards the channel thereby releasing the stress on the channel and the crushed channel from its stress and increases in length.

Each of these functions is accomplished with one hand and without the need for manual dexterity. in other words, even if the user is already wearing a glove or mitten the glove or mitten can operate the closure and release mechanisms with a single hand.

The embodiment of Figs. 10a, 10b and 10c are shown with two pairs of misaligned openings. However, a closure mechanism of the type shown in Figs. 10a, 10b and 10c having only a single pair of misaligned openings, such as that shown in the embodiment of Figs. 8 and 9, may be utilized where only a single free end of the shock cord extends out from the channel.

Likewise, the embodiment of Fig. 1 may be altered to include a single free end of the shock cord extending through the tanka opening.

The critical aspects of the embodiments depicted are the fashion in which the closure mechanisms are securely fastened directly over the channel openings so as to provide improved transference of the energy exerted on the free end of the strap to the closure operation and to improve and enhance the slideability of the shock cord into and out of the channel. This increases the effectiveness of both the tightening and releasing functions associated with the one hand closure mechanism. In preferred embodiments this is achieved by creating a dual strap attachment system. Other attachment approaches which provide this firm attachment may also be used.

The use of the guide member directly above the openings in the channel provide the benefit of easing the movement of the shock cord into and out of the channel and as providing a further guide to the paths through the closure mechanisms. The openings in these members are sized so as not to restrict the motion of the shock cord, even at its largest cross sectional area state through these openings.

Various other types of conventional closure mechanisms which operate in a similar fashion may be utilized in connection with the constructions shown herein and in connection with the embodiments of Figs 10. The shape of the panels may be altered from a rectangular shape to a generally round, oval, or even irregular shape so long as the squeezing pressure with a single hand can cause the misaligned openings on the front and back panel to be aligned. In addition, rather than merely having two panels it would be possible to have three panels (or even more) in which, for example, the front and back panels would be similar generally rectangular panels as shown in the front panel of Fig. 10a with the central or middle panel being formed as the back panel of the embodiment of Fig. 10a. In this way, rather than having only a single kink in the pathway there would be two kinks, thereby increasing the holding power of the closure mechanism.

Thus, an improved one handed closure and release mechanism for tightening a generally tubular member or producing the dimension of a crushable panel is provided. The closure mechanism operates by incorporating a shock cord which is trapped within the closure mechanism and is slidably movable under appropriate stress exerted by only a single hand to a new position in which a greater amount of the free end or free ends of the shock cord are outside of the closure mechanism and the channel is crushed, thereby reducing its length by the decreased portion of shock cord within the channel. Likewise, the release mechanism returns at least a portion of the shock cord's length into the channel and thus releasing the pressure upon the channel.

It will thus be seen that the objects set forth above, among those made apparent in the preceding description, are efficiently obtained and, since certain changes may be made in the above constructions (if not thereby departing from the scope of the invention as defined in the appended claims), it is intended that all matter contained in the above description or shown in the accompanying drawings shall be interpreted as illustrative, and not in a limiting sense.

## Claims

1. A one handed closure and release system for an article (50), comprising:
a crushable channel (111) attached to a crushable portion (110) of an article (50);
a stretchable cord means (120) extending through the channel (111) and at least one end (121,122) of which extends out of an opening (112,113) in the channel (111), in use said cord means (120) stretching along its length in response to pressure, from an unstretched length to a stretched length, the cross-sectional area of said cord means (120) when stretched being less than when unstretched;
releasable closure means (101) being provided for restricting movement of said cord means (120) therethrough when unstretched, and for allowing free motion of said cord means (120) therethrough when stretched, pressure exertable with one hand on said end (121,122) extending said cord means (120) from the unstretched to the stretched length, and moving a portion of said cord means (120) through said closure means (101), and release of said pressure causing a portion of said cord means (120) within the channel (111) to crush said channel (111) as it attempts to return to the unstretched length, thereby shortening the length of said channel (111) and the crushable portion (110) of the article (50) to which it is attached,
a portion of the cord means (120) moved through said closure means (101) upon application of pressure to said end (121,122) moving back through said closure means (101) toward the channel (111) upon one handed release of the said closure means (101), thereby allowing said channel (111) and the portion (110) of the article (50) to which the channel is attached to return to the uncrushed state;
and retaining means (102,103) coupling the said closure means (101) to said article (50) and being placed proximate said opening (112, 113) outside said channel (111),
characterized in that two such retaining means (102, 103), are provided which act one each on respective sides of the opening (112, 113) whereby said closure means is held over said opening (112,113) and restricted from moving away therefrom.

2. The system of claim 1 wherein the channel (111) extends around an opening (115) in said article (50).

3. The system of claim 2 wherein said article is a glove or mitten, and the channel (115) extends around the hand opening.

4. The system of claim 3 wherein the said cord means (120) extends around the perimeter of the hand opening and has two free ends (121,122) extending out of the channel (115).

5. The system of claim 4 wherein said channel has two openings (112,113) one for each of said free ends (121,122), the two free ends also extending through said closure means (101).

6. The system of claim 5 further including a guide member (114) secured to said channel (115) proximate the two channel openings (112,113), the guide member (114) having guide openings aligned with said two channel openings (112,113) to allow smooth movement of the said cord means (120) into and out of the channel (115).

7. The system of claim 1 wherein said channel (115) is attached to a portion (110) of the article (50) defining a dimension of the article which requires selective diminishing thereof, one end (121,122) of said cord means (120) being secured within said channel (115) and the other end (121,122) extending out of the opening (112,113) of the channel (115).

8. The system of any preceding claim wherein the said closure means (101) is a spring loaded closure member of the tanka type.

9. The system of claim 8 wherein the said closure means (101) has extensions (104,105) adapted to be coupled to the article (50) by the retaining means (102,103).

10. The system of claim 1 wherein the said closure means (210) is a two cord path BOW CORD LOCK.

11. The system of claim 10 wherein said closure means has extensions (404) adapted to be coupled to the article (50) by the retaining means (102,103).

12. The system of claim 1 wherein the said closure means (310) is a one cord path BOW CORD LOCK.

13. The system of claim 12 wherein said closure means has extensions adapted to be coupled to the article (50) by the retaining means.

14. The system of claim 1 wherein said releasable closure means is a sliding plate closure mechanism (400).

15. The system of claim 14 wherein the sliding plate closure mechanism (400) has slots (403,404) adapted to receive the retaining means (102,103).

16. The system of any preceding claim wherein the retaining means comprises a pair of straps (102,103) sewn to the article (50), one each on either side of said closure means (101).

17. The system of claim 6 wherein the guide member comprises a leather pad (114) sewn to the mouth of said channel openings (112,113).

## Patentansprüche

1. Einhändig betätigbares Verschließ- und Öffnungssystem für einen Gegenstand (50), bestehend aus:
einem zusammendrückbaren Kanal (111), der an einem zusammendrückbaren Abschnitt (110) eines Gegenstands (50) angebracht ist;
einer dehnbaren Schnuranordnung (120), die sich durch den Kanal (111) erstreckt und von der sich wenigstens ein Ende (121, 122) aus einer Öffnung (112, 113) in den Kanal (111) erstreckt, wobei sich die Schnuranordnung (120) bei Gebrauch entlang ihrer Länge druckabhängig aus einer ungedehnten Länge in eine gedehnte Länge ausdehnt, wobei die Querschnittsfläche der Schnuranordnung (120) bei Dehnung geringer ist als ungedehnt;
wobei eine lösbare Verschlußeinrichtung (101) zur Begrenzung der Bewegung der Schnuranordnung (120) durch diese im ungedehnten Zustand und für das Zulassen einer freien Bewegung der Schnuranordnung (120) durch diese bei Dehnung vorgesehen ist, wobei ein mit einer Hand auf das Ende (121, 122) ausübbarer Druck die Schnuranordnung (120) aus der ungedehnten in die gedehnte Länge verlängert und ein Abschnitt der Schnuranordnung (120) durch die Verschlußeinrichtung (101) bewegt, und wobei ein Entlasten des Druckes einen Abschnitt der Schnuranordnung (120) innerhalb des Kanals zum Zusammendrücken des Kanals (111) veranlaßt, wenn sie versucht, in die ungedehnte Länge zurückzukehren, wodurch die Länge des Kanals (111) und des zusammendrückbaren Abschnitts (110) des Gegenstands, an dem er angebracht ist, verkürzt wird,
wobei sich ein Abschnitt der Schnuranordnung (120), der durch die Verschlußeinrichtung (101) bewegt ist, bei Druckbeaufschlagung des Endes (121, 122) zurück durch die Verschlußeinrichtung (101) in Richtung auf den Kanal (111) bei einhändiger Freigabe der Verschlußeinrichtung (101) bewegt, wodurch der Kanal (111) und der Abschnitt (110) des Gegenstands (50), an dem der Kanal angebracht ist, in den nicht zusammengedrückten Zustand zurückkehren können;
und aus einer Rückhalteeinrichtung (102, 103), die die Verschlußeinrichtung (101) mit dem Gegenstand (50) verbindet und nächst der Öffnung (112, 113) außerhalb des Kanals (111) angeordnet ist,
dadurch gekennzeichnet, daß zwei derartige Rückhalteeinrichtungen (102, 103) vorgesehen sind, die jeweils auf einer entsprechenden Seite der Öffnung (112, 113) wirken, wodurch die Verschlußeinrichtung über die Öffnung (112, 113) gehalten und an einer Wegbewegung von dieser gehindert ist.

2. System nach Anspruch 1, bei dem sich der Kanal (111) um eine Öffnung (115) in dem Gegenstand (50) erstreckt.

3. System nach Anspruch 2, bei dem der Gegenstand ein Handschuh oder Fäustling ist und sich der Kanal (115) um die Handöffnung erstreckt.

4. System nach Anspruch 3, bei dem sich die Schnuranordnung (120) um den Umfang der Handöffnung erstreckt und zwei freie Enden (121, 122) aufweist, die sich aus dem Kanal (115) heraus erstrecken.

5. System nach Anspruch 4, bei dem der Kanal zwei Öffnungen (112, 113), jeweils eine für eins der freien Enden (121, 122), aufweist, wobei sich die freien Enden auch durch die Verschlußeinrichtung (101) erstrecken.

6. System nach Anspruch 5, zu dem weiterhin ein Führungsteil (114) gehört, das an dem Kanal nächst den beiden Kanalöffnungen (112, 113) befestigt ist, wobei das Führungsteil (114) Führungsöffnungen besitzt, die mit den beiden Kanalöffnungen (112, 113) für eine glatte Bewegung der Schnuranordnung (120) in den und aus dem Kanal (115) fluchten.

7. System nach Anspruch 1, bei dem der Kanal (115) an einem Abschnitt (110) des Gegenstands (50) angebracht ist, der eine Abmessung des Gegenstands bildet, welche wahlweise eine Verkleinerung derselben erfordert, wobei ein Ende (121, 122) der Schnuranordnung (120) innerhalb des Kanals (115) befestigt ist, und sich das andere Ende (121, 122) aus der Öffnung (112, 113) des Kanals (115) heraus erstreckt.

8. System nach einem vorangehenden Anspruch, bei dem die Verschlußeinrichtung (101) ein federverspanntes Verschlußteil nach Tankaart ist.

9. System nach Anspruch 8, bei dem die Verschlußeinrichtung (101) Anformungen (104, 105)aufweist, die an den Gegenstand (50) mittels Halteeinrichtungen (102, 103) koppelbar sind.

10. System nach Anspruch 1, bei dem die Verschlußeinrichtung (210) aus einem Zweiwegeschnur-BOW CORD LOCK besteht.

11. System nach Anspruch 10, bei dem die Verschlußeinrichtung Anformungen (404) aufweist, die an den Gegenstand (50) mittels Halteeinrichtungen (102, 103) koppelbar sind.

12. System nach Anspruch 1, bei dem die Verschlußeinrichtung (310)aus einem Einwegschnur-BOW CORD LOCK besteht.

13. System nach Anspruch 12, bei dem die Verschlußeinrichtung Anformungen aufweist, die mit dem Gegenstand (50) mittels Halteeinrichtungen koppelbar sind.

14. System nach Anspruch 1, bei dem die lösbare Verschlußeinrichtung ein Gleitplatten-Verschlußmechanismus (400) ist.

15. System nach Anspruch 14, bei dem der Gleitplatten-Verschlußmechanismus (400) Schlitze (403, 404) besitzt, die für die Aufnahme der Halteeinrichtung (102, 103) vorgesehen sind.

16. System nach einem vorangehenden Anspruch, bei dem die Halteeinrichtungen ein Paar Gurte (102, 103) aufweist, die jeweils auf einer Seite der Verschlußeinrichtung (101) an dem Gegenstand (50) festgenäht sind.

17. System nach Anspruch 6, bei dem das Führungsteil ein Lederpolster (114) besitzt, das an die Mündung der Kanalöffnungen (112, 113) genäht ist.

## Revendications

1. Dispositif de fermeture et d'ouverture manipulable d'une seule main pour un article (50), comprenant :
un canal (111) susceptible d'être resserré fixé à une partie (110) susceptible d'être resserrée d'un article (50) ;
un moyen (120) formant cordon susceptible d'être tendu s'étendant à travers le canal (111) et dont au moins une extrémité (121, 122) s'étend en dehors d'une ouverture (112, 113) dans le canal (111), ledit moyen formant cordon (120) étant tendu lorsqu'il est utilisé suivant sa longueur en réponse à une pression, depuis une longueur non tendue jusqu'à une longueur tendue, la surface en coupe transversale dudit moyen formant cordon (120) lorsqu'il est tendu étant inférieure à sa section lorsqu'il n'est pas tendu ;
des moyens (101) de fermeture libérables étant prévus pour restreindre le mouvement dudit moyen formant cordon (120) à travers eux lorsque le cordon est tendu, une pression exercée avec une main sur ladite extrémité (121, 122) allongeant ledit moyen formant cordon (120) depuis la longueur à l'état non tendu à celle à l'état tendu, et déplaçant une partie dudit moyen formant cordon (120) à travers lesdits moyens de fermeture (101), et une libération de ladite pression provoquant le resserrement dudit canal (111) par une partie dudit moyen formant cordon (120) à l'intérieur du canal (111) dans une tentative de revenir à la longueur à l'état non tendu, raccourcissant par suite la longueur dudit canal (111) et la partie pouvant être resserrée (110) de l'article (50) auquel il est fixé,
une partie du moyen formant cordon (120) lorsqu'elle est déplacée à travers lesdits moyens de fermeture (101) sous l'effet de l'application d'une pression sur ladite extrémité (121, 122) revenant en arrière à travers lesdits moyens de fermeture (101) en direction du canal (111) lors de la libération desdits moyens de fermeture (101) manipulables d'une seule main, permettant ainsi audit canal (111) et à la partie (110) de l'article (50) à laquelle le canal est fixé de revenir à l'état de desserré ;
et des moyens de retenue (102, 103) couplant lesdits moyens de fermeture (101) audit article (50) et étant placés à proximité de ladite ouverture (112, 113) à l'extérieur dudit canal (111),
caractérisé en ce que deux tels moyens de retenue (102, 103), sont prévus qui agissent sur chacun des côtés respectifs de l'ouverture (112, 113) grâce à quoi lesdits moyens de fermeture sont maintenus par-dessus ladite ouverture (112, 113) et sont empêchés de s'en écarter.

2. Dispositif selon la revendication 1, dans lequel le canal (111) s'étend autour d'une ouverture (115) formée dans ledit article (50).

3. Dispositif selon la revendication 2, dans lequel ledit article est un gant ou un moufle, et le canal (115) s'étend autour de l'ouverture pour la main.

4. Dispositif selon la revendication 3, dans lequel ledit moyen formant cordon (120) s'étend autour du périmètre de l'ouverture pour la main et présente deux extrémités libres (121, 122) s'étendant en dehors du canal (115).

5. Dispositif selon la revendication 4, dans lequel ledit canal comporte deux ouvertures (112, 113) une pour chacune des extrémités libres (121, 122), les deux extrémités libres s'étendant également à travers lesdits moyens de fermeture (101).

6. Dispositif selon la revendication 5, comprenant en outre un organe de guidage (114) fixé audit canal (115) à proximité des deux ouvertures du canal (112, 113), l'organe de guidage (114) comportant des ouvertures de guidage alignées avec lesdites deux ouvertures du canal (112, 113) de façon à permettre un mouvement souple dudit moyen formant cordon (120) lorsqu'il pénètre dans le canal (115) et en sort.

7. Dispositif selon la revendication 1, dans lequel ledit canal (115) est fixé à une partie (110) de l'article (50) définissant une dimension de l'article qui nécessite sa réduction sélective, une extrémité (121, 122) dudit moyen formant cordon (120) étant fixée à l'intérieur dudit canal (115) et l'autre extrémité (121, 122) s'étendant en dehors de l'ouverture (112, 113) du canal (115).

8. Dispositif selon l'une quelconque des revendications précédentes, dans lequel lesdits moyens de fermeture (101) sont constitués par un organe de fermeture chargé élastique du type tanka.

9. Système selon la revendication 8, dans lequel lesdits moyens de fermeture (101) comportent des prolongements (104, 105) susceptibles d'être couplés à l'article (50) par les moyens de retenue (102, 103).

10. Dispositif selon la revendication 1, dans lequel lesdits moyens de fermeture (210) sont constitués par un double trajet de cordon de type BOW CORD LOCK.

11. Dispositif selon la revendication 10, dans lequel lesdits moyens de fermeture comportent des prolongements (404) susceptibles d'être couplés à l'article (50) par les moyens de retenue (102, 103).

12. Dispositif selon la revendication 1, dans lequel lesdits moyens de fermeture (310) sont constitués par un double trajet de cordon de type BOW CORD LOCK.

13. Dispositif selon la revendication 12, dans lequel lesdits moyens de fermeture comportent des prolongements susceptibles d'être couplés à l'article (50) par les moyens de retenue.

14. Dispositif selon la revendication 1 dans lequel lesdits moyens de fermeture libérables sont constitués par un mécanisme (400) à plaque coulissante.

15. Dispositif selon la revendication 14, dans lequel ledit mécanisme (400) de fermeture à plaque coulissante comporte des fentes (403,404) susceptibles de recevoir les moyens de retenue (102, 103).

16. Dispositif selon l'une quelconque des revendications précédentes, dans lequel lesdits moyens de retenue comprennent une paire de sangles (102, 103) cousues sur l'article (50), une de chaque côté desdits moyens de fermeture (101).

17. Dispositif selon la revendication 6, dans lequel l'organe de guidage comporte un patin en cuir (114) cousu à l'entrée desdites ouvertures de canal (112, 113).
